# FASCICULE DE BREVET EUROPEEN

(11) **EP 0 487 405 B1**
(45) Date de publication et mention de la délivrance du brevet: **16.08.1995**
(21) Numéro de dépôt: 91403109.1
(22) Date de dépôt: 19.11.1991
(51) Int. Cl.: G01P 3/44

(54) **Capteur de vitesse de rotation et palier à roulement équipé d'un tel capteur**
Drehzahlmessaufnehmer und Wälzlager, ausgerüstet mit einem solchen Aufnehmer
Angular velocity sensor and roller bearing equiped with such a sensor

(30) Priorité: 21.11.1990 FR 9014535
(43) Date de publication de la demande: 27.05.1992
(73) Titulaire: SKF FRANCE, F-92142 Clamart Cédex (FR)
(72) Inventeur: Caillault, Claude, F-37390 Saint Roch (FR); Houdayer, Christophe, F-37000 Tours (FR); Rigaux, Christian, F-37260 Artannes sur Indre (FR)
(74) Mandataire: Dossmann, Gérard

(56) Documents cités:
- EP-A- 0 357 870
- EP-A- 0 394 083
- EP-A- 0 438 624
- CH-A- 580 812
- FR-A- 2 325 935
- FR-A- 2 640 706
- US-A- 4 171 495

## Description

La présente invention a pour objet un dispositif de capteur de vitesse de rotation pour un organe tournant monté à l'intérieur d'un palier à roulement sur un organe non tournant, la détermination de vitesse de rotation se faisant par détection de champ magnétique. Le dispositif de l'invention est utilisable en particulier pour détecter la vitesse de rotation dans un palier à roulement d'un moyeu de roue associé par exemple à un système de freinage anti-blocage (ABS).

Les dispositifs de ce type comprennent généralement un élément codeur produisant un champ magnétique au moyen d'une bague magnétisée comportant une multitude de pôles alternés coopérant avec un capteur du type actif tel qu'une sonde à effet Hall, une magnétorésistance ou analogue, le capteur étant disposé en regard de l'élément codeur avec un certain entrefer.

On connaît déjà par la demande de brevet européen EP 319 355 un roulement à détecteur de champ magnétique utilisant un anneau multipolaire associé à un détecteur de champ magnétique pouvant comporter un concentrateur de flux magnétique. Malgré l'avantage du faible encombrement d'un tel dispositif de capteur intégré dans un roulement, on constate cependant un certain nombre d'inconvénients. Tout d'abord la structure du roulement doit être conçue en fonction du dispositif de capteur utilisé. De plus la mesure est perturbée lors de variations excessives d'entrefer entre l'anneau multipolaire et le capteur, de telles variations d'entrefer pouvant se présenter notamment lors de défauts de rotation de l'anneau multipolaire (voilage ou excentrage par exemple).

De la même manière, dans la demande de brevet français 2 640 706 se trouve décrit un palier à roulement muni d'un dispositif de capteur de vitesse annulaire rapporté axialement sur un élément non tournant du palier à roulement. Ce dispositif présente des avantages en ce qui concerne la facilité de mise en place et la protection vis-à-vis du milieu extérieur. Toutefois comme précédemment, un voilage éventuel de l'élément codeur ou de son support peut provoquer des perturbations dans la détection du fait d'une variation d'entrefer. Ce dispositif est en outre sensible à des défauts de positionnement axial relatifs entre l'élément codeur et le capteur.

Le brevet US 3 742 243 décrit un dispositif de capteur de vitesse de rotation d'un organe tournant au moyen d'une sonde à effet Hall associée à une bague multipolaire. La bague multipolaire est réalisée au moyen d'un aimant à polarisation axiale comportant deux plaques polaires munies de dents, chaque plaque constituant ainsi une rangée de dents de polarités opposées d'une plaque à l'autre. Le capteur à effet Hall est muni de moyens adaptés pour recueillir les champs magnétiques générés par la bague multipolaire et pour concentrer les flux ainsi recueillis sur le capteur proprement dit. Si ce dispositif présente l'avantage d'améliorer la qualité du signal en permettant dans une certaine mesure de réduire l'effet d'éventuels défauts de voilage ou de faux ronds de la bague multipolaire, il présente en revanche l'inconvénient d'être de structure complexe et de présenter un encombrement important.

La présente invention a donc pour objet un dispositif de capteur de vitesse permettant l'obtention d'un signal fiable, régulier et suffisamment puissant pour être exploité convenablement avec un entrefer entre le capteur et l'élément codeur aussi réduit et aussi constant que possible grâce à une structure simple et peu coûteuse, le dispositif étant très peu sensible aux variations d'entrefer entre le capteur et l'anneau multipolaire et assurant en outre une bonne protection de l'élément codeur et du capteur par rapport au milieu extérieur.

L'invention a également pour objet un dispositif de capteur de vitesse dans lequel les lignes de champ magnétique sont canalisées vers le capteur avec un minimum de perte.

Tel qu'il est revendiqué, le dispositif de capteur de vitesse de rotation d'un organe tournant monté par l'intermédiaire d'un palier à roulement sur un organe non tournant, comprend un élément codeur solidaire de l'organe tournant produisant un champ magnétique alterné au moyen d'un anneau multipolaire et, au moins un élément capteur solidaire de l'organe non tournant et disposé en regard de l'élément codeur avec un entrefer. L'élément capteur comporte un capteur proprement dit et au moins un élément concentrateur de flux magnétique associé au capteur. Selon l'invention, le dispositif comprend deux éléments séparés concentrateurs de flux présentant chacun une portion de concentration de flux prolongée par une branche collectrice de flux. Le capteur est monté entre les deux portions de concentration de flux et l'anneau multipolaire est disposé entre deux branches collectrices de flux de façon que deux pôles de signes opposés soient simultanément et respectivement en regard des deux branches collectrices de flux.

Le capteur ainsi que les deux éléments concentrateurs de flux sont de préférence noyés dans une matière moulable telle qu'une résine synthétique, les deux extrémités des deux branches collectrices de flux faisant saillie à l'extérieur définissant ainsi un espace à l'intérieur duquel peut défiler l'anneau multipolaire en rotation.

Les éléments concentrateurs de flux présentent avantageusement une forme repliée en U.

Dans un premier mode de réalisation, l'anneau multipolaire présente une magnétisation radiale. L'élément capteur est alors disposé axialement en regard de l'anneau multipolaire de façon que les deux branches collectrices de flux soient disposées avec un entrefer radial en regard des pôles externe et interne de l'anneau multipolaire. A cet égard on entend par pôle externe, le pôle étant radialement le plus éloigné de l'axe de rotation du palier et par pôle interne, celui étant au contraire radialement le plus proche de l'axe de rotation du palier.

L'élément capteur est de préférence solidaire d'une couronne de montage destinée à être fixée par exemple par encliquetage sur une pièce non tournante du palier à roulement.

Dans un mode de réalisation avantageux, l'anneau multipolaire est monté sur un flasque de support faisant partie d'un joint d'étanchéité latéral du palier à roulement. La couronne de montage de l'élément capteur peut alors être directement encliquetée sur l'armature du joint d'étanchéité. L'étanchéité peut encore être améliorée en prévoyant une lèvre d'étanchéité supplémentaire montée sur le flasque de support et capable d'entrer en contact avec un rebord de la couronne de montage.

Un circuit imprimé de traitement du signal émis par le capteur peut être aisément intégré dans la couronne de montage. Celle-ci peut comporter une tête de connexion reliée électriquement au capteur par l'intermédiaire du circuit imprimé et permettant la transmission du signal émis par le capteur à une unité de traitement externe faisant par exemple partie d'un système anti-blocage de frein (ABS).

Dans un autre mode de réalisation, l'anneau multipolaire présente une magnétisation axiale. L'élément capteur est alors disposé radialement en regard de l'anneau multipolaire de façon que les deux branches collectrices de flux soient disposées avec un entrefer axial en regard des pôles latéraux de l'anneau multipolaire.

L'élément capteur peut par exemple présenter une forme de bouchon monté radialement dans un orifice pratiqué dans une pièce non tournante.

Selon un mode particulier de réalisation de l'invention dans le cas où le capteur est constitué par une bobine d'induction du type passif, les deux éléments concentrateurs de flux sont remplacés par un seul élément concentrateur de flux sous forme d'un U dont les branches constituent les branches collectrices de flux. La bobine d'induction est disposée autour d'une partie de l'élément concentrateur de flux en U.

L'invention sera mieux comprise à l'étude de la description détaillée de quelques modes de réalisation pris à titre d'exemples nullement limitatifs et illustrés par les dessins annexés sur lesquels :
la figure 1 est une vue en coupe axiale d'un dispositif de capteur de vitesse selon l'invention comportant un anneau multipolaire à aimantation radiale;
la figure 2 est une vue extérieure de droite de l'élément capteur utilisé dans le dispositif de la figure 1;
les figures 3 et 4 montrent en perspective deux modes de réalisation d'éléments concentrateurs de flux pouvant être utilisés dans un dispositif de capteur de l'invention;
les figures 5a et 5b illustrent en coupe deux cas de déplacement relatif de l'anneau magnétique multipolaire par rapport au capteur;
la figure 6 illustre en coupe partielle, un mode de réalisation dans lequel l'anneau multipolaire présente une aimantation axiale; et
les figures 7 à 10 montrent des vues partielles en coupe axiale de quatre modes de réalisation de l'invention avec l'anneau multipolaire pourvu d'une aimantation radiale et un ou plusieurs capteurs passifs.

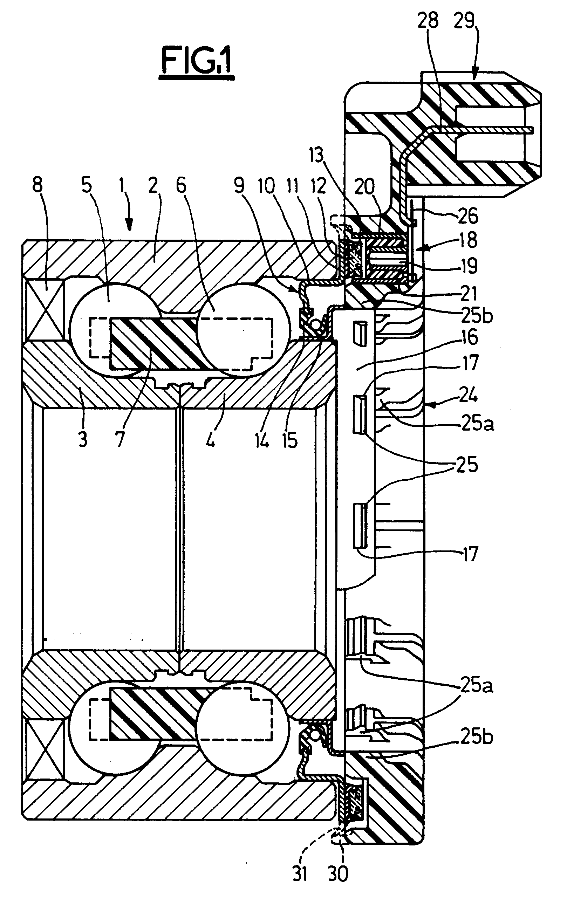

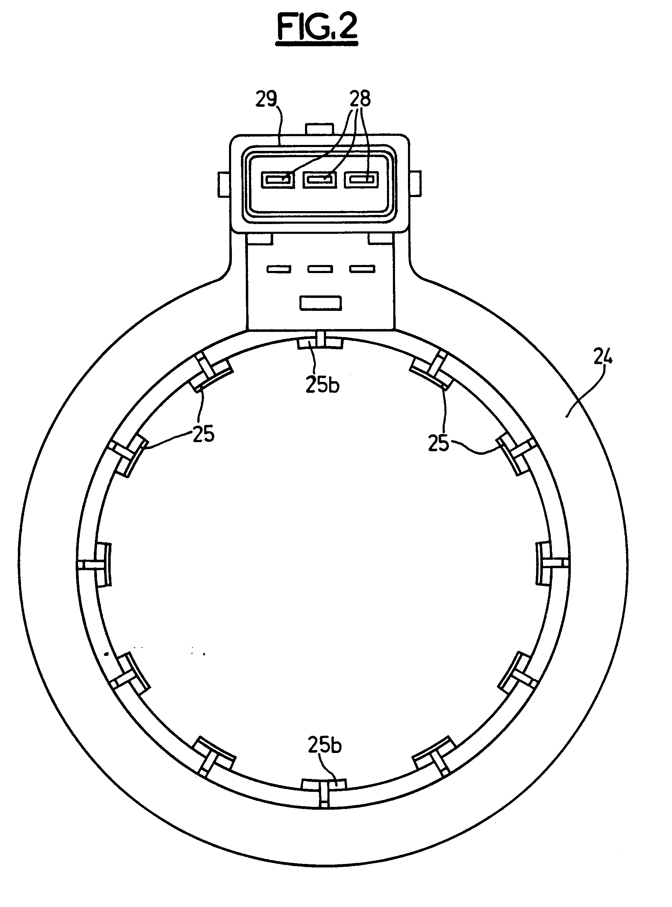

Tel qu'il est illustré sur les figures 1 et 2, le dispositif de capteur de vitesse selon l'invention est monté sur un palier à roulement 1 comportant une bague extérieure tournante 2 et deux demi-bagues intérieures non tournantes 3, 4. Entre la bague extérieure 2 et les deux demi-bagues intérieures 3, 4 sont montées deux rangées de billes 5, 6 à contacts obliques maintenues avec un écartement convenable par une cage 7. L'étanchéité latérale du palier à roulement 1 est assurée d'un côté par un joint d'étanchéité de type classique 8 et de l'autre par un joint d'étanchéité 9 adapté au montage de l'élément codeur du dispositif de capteur de vitesse de rotation selon l'invention. A cet effet, le joint d'étanchéité 9 présente un flasque de support 10, de préférence en matériau amagnétique tel qu'un acier inox, monté dans l'alésage de la bague extérieure 2 et muni d'une collerette radiale 11, un anneau multipolaire 12 à magnétisation radiale étant fixé sur ladite collerette radiale 11 directement ou par l'intermédiaire d'une couronne 13 non magnétique réalisée par exemple en élastomère ou en matière plastique. Le joint d'étanchéité 9 présente une bague annulaire d'étanchéité 14 par exemple en caoutchouc venant en contact de frottement avec une armature 15 montée autour de la demi-bague 4. L'armature 15 présente une collerette 16 munie d'une pluralité de fentes 17 et de deux encoches d'indexation diamètralement opposées ouvertes axialement, non représentées sur les figures.

Le dispositif de capteur de vitesse de l'invention comprend l'anneau multipolaire 12 jouant le rôle d'élément codeur et un élément capteur référencé 18 dans son ensemble.

L'anneau multipolaire 12 monté sur son support amagnétique 13 afin d'éviter la dispersion des champs magnétiques dans les pièces avoisinantes est constitué par exemple par une pluralité d'aimants permanents placés côté à côte, à aimantation alternée.

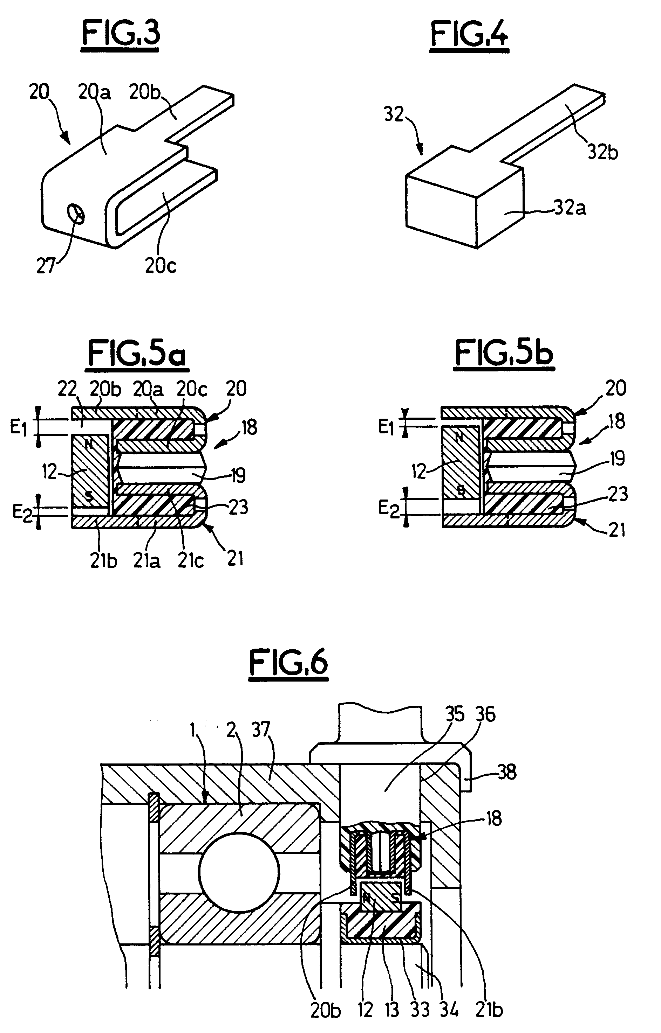

L'élément capteur 18 visible également sur les figures 5a et 5b comprend un capteur actif 19 qui peut être constitué par exemple par une sonde à effet Hall, une magnétorésistance ou un élément actif analogue. Le capteur actif 19 est disposé directement entre deux éléments 20, 21 concentrateurs de flux magnétique réalisés par exemple en acier magnétique. Les deux éléments concentrateurs 20, 21 sont de structure identique, l'élément concentrateur 20 étant disposé radialement à l'extérieur par rapport à l'axe de rotation du palier 1 tandis que l'élément concentrateur 21 est disposé à l'intérieur par rapport à l'élément concentrateur 20.

L'un des éléments concentrateurs de flux 20 est illustré en perspective sur la figure 3. L'élément concentrateur 20 présente une branche collectrice de flux 20b dont la largeur est adaptée à la largeur des segments polaires de l'anneau multipolaire 12 avec lesquels elle vient en regard. L'élément concentrateur 20 présente également une portion de concentration de flux 20c dont la largeur est adaptée à celle du capteur 19. La branche collectrice de flux 20b se prolonge par une partie 20a de même largeur que la portion 20c et repliée en U pour se poursuivre sous la forme de la portion 20c parallèle et en contact direct avec le capteur 19. Comme on le voit en particulier sur la figure 3, la portion de concentration de flux 20c est plus large que la branche collectrice de flux 20b. Elle est de même largeur que la partie 20a.

Lorsque les deux éléments concentrateurs de flux magnétique 20 et 21 sont disposés en contact sur chacune des faces interne et externe du capteur 19 comme illustré sur les figures 1, 5a et 5b, on comprend que grâce à la forme en U des éléments 20 et 21, les branches collectrices de flux 20b, 21b fassent saillie au-delà du capteur 19 et des portions de concentration de flux 20c, 21c. Un espace 22 se trouve défini entre les extrémités des deux branches collectrices de flux 20b, 21b à l'intérieur duquel se trouve logé l'anneau multipolaire 12 entraîné en rotation. L'ensemble constitué par le capteur 19 et les deux éléments concentrateurs 20 et 21 est noyé par surmoulage à l'intérieur d'un bloc 23 de résine ou de matière plastique moulable électriquement isolante constituant l'élément capteur 18 dans son ensemble.

L'élément capteur 18 est solidaire d'une couronne de montage 24 visible sur les figures 1 et 2 présentant une pluralité de griffes radiales 25 capables de venir s'encliqueter dans les fentes 17 de l'armature 15, les griffes 25 étant disposées dans l'alésage de la couronne 24 et venant pénétrer depuis l'extérieur dans les fentes 17. Les griffes 25 sont aménagées à l'extrémité de doigts élastiques 25a issus de la couronne 24 et visibles en partie sur la figure 1. A l'endroit du capteur 19 et en position diamètralement opposée, ces doigts élastiques sont remplacés par des pions d'indexation 25b capables de pénétrer dans les encoches d'indexation axialement ouvertes prévues sur la collerette 16. Les concentrateurs de flux 20 et 21 peuvent comporter des trous 27 servant au centrage desdits concentrateurs dans le moule avant surmoulage de la couronne de montage 24.

Un circuit imprimé 26 est relié électriquement au capteur 19 afin de réaliser un traitement préalable du signal émis par le capteur 19. Le circuit imprimé 26 est intégré dans la couronne de montage 24 à proximité de l'élément capteur 18. Des broches de connexion 28 relient le circuit imprimé 26 à une tête de connexion 29 intégrée à la couronne de montage 24 et permettant la transmission du signal émis par le capteur 19 jusqu'à une unité de traitement extérieur faisant par exemple partie d'un dispositif anti-blocage de roue de véhicule automobile.

Si cela est nécessaire, on peut prévoir des moyens d'étanchéité supplémentaires pour parfaire l'isolation par rapport au milieu extérieur. A titre d'exemple on a illustré sur la figure 1 une variante représentée en trait interrompu dans laquelle la couronne de montage 24 présente un rebord périphérique 30 avec lequel entre en contact une lèvre d'étanchéité 31 faisant partie de la bague 13 servant de fixation à l'anneau multipolaire 12.

Bien que sur les figures 1 et 2 on ait illustré le montage du dispositif de capteur de vitesse selon l'invention sur un palier à roulement de type classique, on comprendra que le dispositif de l'invention pourrait être appliqué avantageusement dans un roulement intégré de roue non motrice de véhicule, les bagues intérieures 3, 4 du roulement étant fixes et la bague extérieure présentant des moyens permettant de supporter la roue et le disque de frein et étant entraînée en rotation.

En se reportant maintenant aux figures 5a et 5b on va montrer que le dispositif de l'invention reste très peu sensible à de légers défauts de positionnement relatifs entre l'anneau multipolaire 12 et l'élément capteur 18.

Grâce à la disposition selon l'invention, la transmission des lignes de champ magnétique de l'anneau multipolaire 12 vers le capteur 19 ne se fait pas directement mais au contraire par l'intermédiaire des deux éléments concentrateurs de flux 20 et 21. En effet l'élément capteur 18 est disposé par rapport à l'anneau multipolaire 12 de telle manière que ce dernier défile en rotation entre les branches collectrices 20b, 21b. Lorsqu'une branche collectrice telle que 20b est en regard d'un pôle par exemple d'un pôle nord de l'anneau multipolaire, l'autre branche collectrice 21b est en regard d'un pôle de signe opposé c'est-à-dire ici d'un pôle sud du même segment de l'anneau multipolaire 12. L'entrefer entre le pôle nord et la branche collectrice 20b étant noté E₁ tandis que l'entrefer entre le pôle sud du même élément et la branche collectrice 21b est noté E₂ comme on peut le voir sur la figure 5a à titre d'exemple. Sur cette figure, on a représenté un léger défaut de positionnement de l'élément capteur 18 par rapport à l'anneau multipolaire 12 tel que l'entrefer E₁ soit supérieur à l'entrefer E₂. Malgré ce défaut, la somme des deux entrefers E₁ et E₂ entre les branches collectrices 20b et 21b reste constante. Une augmentation de l'entrefer E₁ correspond à une diminution de l'entrefer E₂ de la même valeur et vice versa. Sur la figure 5b on a représenté un défaut de positionnement inverse dans lequel l'entrefer E₁ est inférieur à l'entrefer E₂.

Dans tous les cas, étant donné que la somme des deux entrefers reste constante, le signal reçu par le capteur 19 n'est pratiquement pas affecté par les déplacements relatifs de l'anneau multipolaire 12 par rapport aux branches collectrices 20b, 21b dans un plan perpendiculaire à ces branches.

D'autre part, tout déplacement relatif de l'anneau multipolaire 12 par rapport aux branches collectrices 20b, 21b dans un plan parallèle à ces dernières n'affecte pas non plus sensiblement le signal émis par le capteur 19 dans la mesure où l'anneau multipolaire 12 reste situé en majeure partie à l'intérieur de l'espace 22 entre les branches collectrices 20b et 21b. Le dispositif de l'invention est donc très peu sensible au voilage et au faux rond de rotation qui pourraient exister sur l'anneau multipolaire lui-même 12 et/ou son support constitué par la collerette radiale 11 de l'armature 10.

La figure 4 illustre une variante de réalisation d'un élément concentrateur de flux référencé 32 dans son ensemble et présentant comme l'élément concentrateur de flux 20 illustré sur la figure 3 une branche collectrice de flux 32b. Celle-ci est solidaire d'une portion massive 32a jouant le rôle de concentrateur de flux et qui vient en contact direct avec le capteur 19 comme c'était le cas de la portion de concentration de flux 20c de l'élément 20.

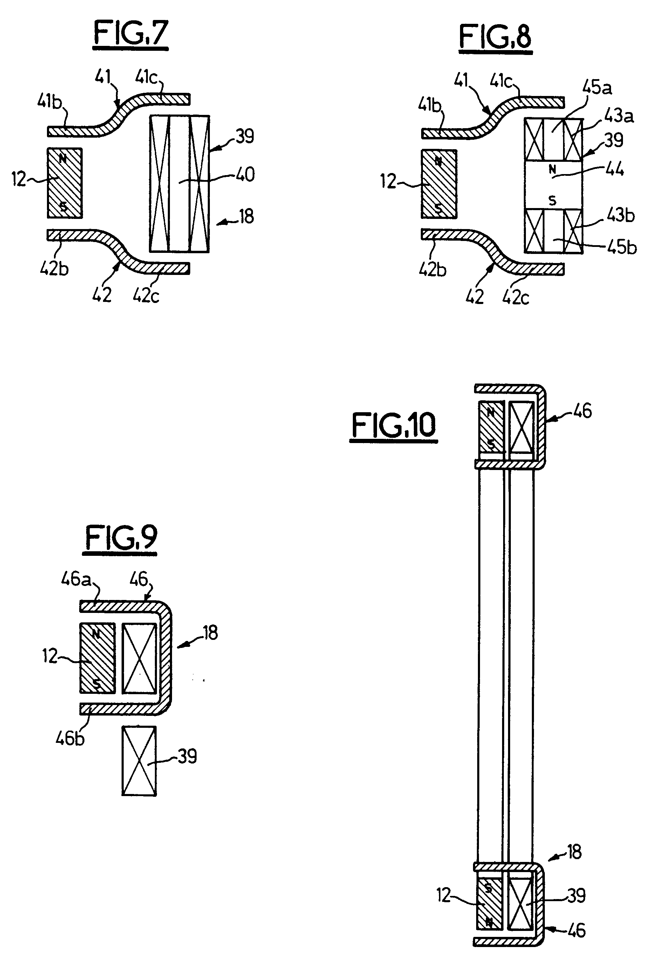

Le mode de réalisation illustré sur la figure 6 sur laquelle les pièces identiques ou analogues portent les mêmes références illustre l'application de l'invention à un anneau multipolaire 12 à aimantation axiale. L'anneau multipolaire 12 est monté sur un support amagnétique 13 par exemple en matière plastique solidaire d'une bague 33, de préférence amagnétique elle aussi, montée à l'extrémité d'un arbre 34 sur lequel est également monté un roulement 1 qui est ici un roulement à billes à simple rangée de billes.

L'élément capteur 18 qui est de structure analogue à celui utilisé précédemment illustré sur les figures 1 à 5 est disposé de façon que les deux branches collectrices 20b, 21b se trouvent en regard des pôles latéraux de signes opposés de l'anneau multipolaire 12 avec un entrefer axial. L'élément capteur 18 est solidaire d'un bouchon 35 qui traverse une perforation 36 pratiquée dans une pièce non tournante 37 à l'intérieur de laquelle se trouve montée la bague extérieure 2 du roulement 1. Une barrette 38 venant coiffer la face frontale extérieure de la pièce non tournante 37 permet de s'assurer de l'orientation convenable de l'élément capteur 18 lors du montage du bouchon 35, jouant ainsi une fonction de détrompage.

Au lieu d'avoir un capteur actif 19, l'invention permet l'utilisation d'un capteur passif dans l'élément capteur 18.

Comme illustré sur la figure 7, l'élément capteur 18 comprend un capteur passif 39 sous forme d'une bobine dont le noyau 40 est en fer doux, deux éléments concentrateurs de flux 41 et 42 présentant une branche collectrice de flux 41b, 42b et une portion de concentration de flux 41c, 42c. Des branches collectrices 41b, 42b sont disposées de la même manière que celle illustrée sur les figures 1, 5a et 5b pour une aimantation radiale de l'anneau multipolaire 12. Les portions de concentration 41c, 42c sont de forme et de dimensions adaptées au noyau 40 de la bobine et sont disposées en regard des extrémités du noyau 40 respectivement.

Lorsque l'anneau multipolaire 12 est entraîné en rotation, le champ magnétique guidé par les éléments concentrateurs 41, 42 et traversant la bobine 39 varie et génère un courant induit dans cette dernière, la fréquence du courant induit dans la bobine 39 étant proportionnelle à la vitesse de rotation de l'anneau multipolaire 12.

La figure 8 montre une variante de la figure 7 avec le capteur 39 constitué par deux bobines 43a, 43b et un aimant permanent 44 dont les pôles opposés s'alignent radialement. Les noyaux 45a, 45b des bobines 43a, 43b se trouvent dans le prolongement l'un de l'autre et sont séparés l'un de l'autre par l'aimant permanent 44 dont les pôles sont en contact avec les noyaux des bobines, les bobines étant connectées électriquement l'une à l'autre.

Comme illustré sur la figure 9, l'élément capteur 18 comprend un capteur passif 39 sous forme d'une bobine d'induction et un élément concentrateur de flux 46 en remplacement des deux éléments concentrateurs dans les modes de réalisation de l'invention décrits précédemment.

L'élément concentrateur unique 46 est réalisé en matériau ferromagnétique sous forme d'un U dont les parties d'extrémité des branches parallèles constituent les branches collectrices de flux 46a, 46b, lesdites branches collectrices étant disposées de la même manière que les modes précédents par rapport à l'anneau multipolaire à aimantation radiale. Une partie de l'élément concentrateur 46 en U, autre que les branches collectrices 46a, 46b, constitue le noyau de la bobine 39.

la figure 10 illustre un mode de réalisation proche de celui illustré sur la figure 9. La seule différence est que la bobine 39 forme un anneau dont le diamètre est sensiblement le même que le diamètre de l'anneau multipolaire 12, un ou plusieurs élément(s) concentrateur(s) de flux 46 étant disposé(s) sur la circonférence de la bobine 39 de manière à ce que tous les concentrateurs fassent circuler simultanément dans la bobine des lignes de champ magnétique de sens identique.

## Revendications

1. Dispositif de capteur de vitesse de rotation d'un organe tournant monté par l'intermédiaire d'un palier à roulement (1) sur un organe non tournant, comprenant un élément codeur solidaire de l'organe tournant produisant un champ magnétique alterné au moyen d'un anneau multipolaire (12) et, au moins un élément capteur (18) solidaire de l'organe non tournant et disposé en regard de l'élément codeur avec un entrefer, l'élément capteur comportant un capteur proprement dit (19, 39) et au moins un élément concentrateur de flux magnétique (20, 21, 41, 42) associé au capteur, caractérisé par le fait qu'il comprend deux éléments séparés concentrateurs de flux présentant chacun une portion de concentration de flux (20c, 21c, 41c, 42c) prolongée par une branche collectrice de flux (20b, 21b, 41b, 42b), que le capteur est monté entre les deux portions de concentration de flux et, que l'anneau multipolaire (12) est disposé entre deux branches collectrices de flux de façon que deux pôles de signes opposés soient simultanément et respectivement en regard des deux branches collectrices de flux.

2. Dispositif selon la revendication 1, caractérisé par le fait que le capteur (19; 39) et les deux éléments concentrateurs de flux (20, 21; 41, 42) sont noyés dans une matière moulable, les extrémités des deux branches collectrices de flux (20b, 21b; 41b, 42b) faisant saillie vers l'extérieur.

3. Dispositif selon la revendication 1 ou 2, caractérisé par le fait que l'anneau multipolaire (12) présente une magnétisation radiale, l'élément capteur (18) étant disposé axialement en regard de l'anneau multipolaire de façon que les deux branches collectrices de flux (20b, 21b; 41b, 42b) soient disposées avec un entrefer radial en regard des pôles externe et interne de l'anneau multipolaire.

4. Dispositif selon la revendication 3, caractérisé par le fait que l'élément capteur (18) est solidaire d'une couronne de montage (24) qui peut être encliquetée sur une pièce non tournante (15).

5. Dispositif selon la revendication 4, caractérisé par le fait que l'anneau multipolaire (12) est monté sur un flasque de support (10) faisant partie d'un joint d'étanchéité latéral (9) du palier à roulement (1), la couronne de montage (24) de l'élément capteur (18) étant encliquetée sur l'armature (15) non tournante du joint d'étanchéité (9) précité.

6. Dispositif selon la revendication 5, caractérisé par le fait qu'une lèvre d'étanchéité supplémentaire (31) est montée sur le flasque de support (10) et entre en contact avec un rebord (30) de la couronne de montage (24).

7. Dispositif selon l'une quelconque des revendications 4 à 6, caractérisé par le fait qu'un circuit imprimé de traitement du signal (26) est intégré dans la couronne de montage (24) laquelle présente en outre une tête de connexion (29) reliée électriquement au capteur (19; 39) et permettant la transmission du signal émis par le capteur à une unité de traitement extérieure.

8. Dispositif selon la revendication 1 ou 2, caractérisé par le fait que l'anneau multipolaire présente une magnétisation axiale, l'élément capteur (18) étant disposé radialement en regard de l'anneau multipolaire (12) de façon que les branches collectrices de flux (20b, 21b) soient disposées avec un entrefer axial en regard des pôles latéraux de l'anneau multipolaire.

9. Dispositif selon la revendication 8, caractérisé par le fait que l'élément capteur (18) est solidaire d'un bouchon (35) venant se placer radialement à travers une pièce non tournante (37).

10. Dispositif selon l'une des revendications précédentes, caractérisé par le fait que les éléments concentrateurs de flux (20, 21) présentent une forme repliée en U.

11. Dispositif selon l'une des revendications précédentes, caractérisé par le fait que le capteur (19) est du type actif tel qu'une sonde à effet Hall, une magnétorésistance ou analogue.

12. Dispositif selon l'une des revendication 1 à 10, caractérisé par le fait que le capteur (39) est du type passif comprenant une ou deux bobines d'induction (43a, 43b) dont le(s) noyau(x) (40; 45a, 45b) est (sont) en regard des portions de concentration de flux (41c, 42c) des éléments concentrateurs (41,42).

13. Dispositif selon la revendication 12, caractérisé par le fait que les deux bobines (43a, 43b) se trouvent dans le prolongement l'une de l'autre et sont séparées par un aimant permanent (44) dont les pôles sont en contact avec les noyaux (45a, 45b) des bobines, lesdites bobines étant connectées électriquement l'une à l'autre.

14. Dispositif de capteur de vitesse de rotation d'un organe tournant monté par l'intermédiaire d'un palier à roulement (1) sur un organe non tournant, comprenant un élément codeur solidaire de l'organe tournant produisant un champ magnétique alterné au moyen d'un anneau multipolaire (12) et, au moins un élément capteur (18) solidaire de l'organe non tournant et disposé en regard de l'élément codeur avec un entrefer l'élément capteur comportant un capteur proprement dit et plusieurs éléments concentrateurs de flux magnétique associés au capteur, caractérisé par le fait que les éléments concentrateurs (46) de flux magnétique préséntent la forme d'un U dont les parties d'extrémités des branches parallèles constituent deux branches collectrices (46a, 46b) de flux magnétique et, que le capteur (39) est du type passif sous forme d'une bobine entourant une partie de l'élément concentrateur autre que les branches collectrices de flux, l'anneau multipolaire (12) étant disposé entre les deux branches collectrices de flux de façon que deux pôles de signes opposés soient simultanément et respectivement en regard des deux branches collectrices de flux.

15. Dispositif selon la revendication 14, caractérisé par le fait que la bobine (39) constituant le capteur passif est réalisée sous forme d'un anneau dont le diamètre est sensiblement identique au diamètre de l'anneau multipolaire (12).

16. Dispositif selon la revendication 15, caractérisé par le fait qu'il comprend plusieurs éléments concentrateurs de flux (46) disposés sur la circonférence de la bobine (39) de manière à ce que tous les éléments concentrateurs fassent circuler simultanément dans la bobine des lignes de champ magnétique de sens identique.

17. Dispositif de capteur de vitesse de rotation d'un organe tournant monté par l'intermédiaire d'un palier à roulement (1) sur un organe non tournant, comprenant un élément codeur solidaire de l'organe tournant produisant un champ magnétique alterné au moyen d'un anneau multipolaire (12) et, au moins un élément capteur (18) solidaire de l'organe non tournant et disposé en regard de l'élément codeur avec un entrefer, l'élément capteur comportant un capteur proprement dit et un élément concentrateur de flux magnétique associé au capteur, caractérisé par le fait que l'élément concentrateur (46) de flux magnétique présente la forme d'un U dont les parties d'extrémités des branches parallèles constituent deux branches collectrices (46a, 46b) de flux magnétique et, que le capteur (39) est du type passif sous forme d'une bobine entourant une partie de l'élément concentrateur autre que les branches collectrices de flux, une partie de l'élément concentrateur 46 en U, autre que les branches collectrices 46a, 46b, constituant le noyau de la bobine 39, l'anneau multipolaire (12) étant disposé entre les deux branches collectrices de flux de façon que deux pôles de signes opposés soient simultanément et respectivement en regard des deux branches collectrices de flux.

18. Dispositif selon la revendication 17 caractérisé par le fait que la bobine (39) constituant le capteur passif est enroulée autour d'une partie de l'élément concentrateur.

19. Palier à roulement équipé d'un dispositif de capteur de vitesse de rotation selon l'une quelconque des revendications précédentes.

## Claims

1. Sensor device for speed of rotation of a turning member mounted by the agency of a rotating bearing (1) onto a non-turning member, comprising a coder element integral with the turning member producing an alternating magnetic field by means of a multipolar annulus (12) and at least one sensor element (18) integral with the non-turning member, and arranged opposite the coder element with an air gap, the sensor element comprising a sensor proper (19, 39) and at least one magnetic flux concentrator element (20, 21, 41, 42) associated with the sensor, characterized by the fact that it comprises two separate flux concentrator elements each having a flux concentration portion (20c, 21c, 41c, 42c) extended by a flux collector branch (20b, 21b, 41b, 42b), that the sensor is mounted between the two flux concentration portions and that the multipolar annulus (12) is arranged between two flux collector branches such that two poles of opposite signs are simultaneously and respectively opposite the two flux collector branches.

2. Device according to Claim 1, characterized by the fact that the sensor (19; 39) and the two flux concentrator elements (20, 21; 41, 42) are immersed in a mouldable material, the extremities of the two flux collector branches (20b, 21b; 41b, 42b) projecting outwards.

3. Device according to Claim 1 or 2, characterized by the fact that the multipolar annulus (12) has a radial magnetization, the sensor element (18) being arranged axially opposite the multipolar annulus such that the two flux collector branches (20b, 21b; 41b, 42b) are arranged with a radial air gap opposite the external and internal poles of the multipolar annulus.

4. Device according to Claim 3, characterized by the fact that the sensor element (18) is integral with a mounting collar (24) which can be clipped onto a non-turning part (15).

5. Device according to Claim 4, characterized by the fact that the multipolar annulus (12) is mounted on a support flange (10) forming part of a lateral sealing joint (9) of the rotating bearing (1), the mounting collar (24) of the sensor element (18) being clipped onto the non-turning armature (15) of the aforementioned sealing joint (9).

6. Device according to Claim 5, characterized by the fact that an additional sealing lip (31) is mounted on the support flange (10) and comes into contact with a rim (30) of the mounting collar (24).

7. Device according to any one of Claims 4 to 6, characterized by the fact that a printed circuit for processing of the signal (26) is integrated into the mounting collar (24) which has moreover a connection head (29) linked electrically to the sensor (19; 39) and permitting the transmission of the signal produced by the sensor to an external processing unit.

8. Device according to Claim 1 or 2, characterized by the fact that the multipolar annulus has an axial magnetization, the sensor element (18) being arranged radially opposite the multipolar annulus (12) such that the flux collector branches (20b, 21b) are arranged with an axial air gap opposite the lateral poles of the multipolar annulus.

9. Device according to Claim 8, characterized by the fact that the sensor element (18) is integral with a stopper (35) coming to be placed radially through a non-turning part (37).

10. Device according to one of the preceding claims, characterized by the fact that the flux concentrator elements (20, 21) have a shape folded into a U.

11. Device according to one of the preceding claims, characterized by the fact that the sensor (19) is of the active type such as a Hall-effect probe, a magneto-resistor or similar.

12. Device according to one of the Claims 1 to 10, characterized by the fact that the sensor (39) is of the passive type comprising one or two induction coils (43a, 43b) whose core(s) (40; 45a, 45b) is (are) opposite the flux concentrator portions (41c, 42c) of the concentrator elements (41, 42).

13. Device according to Claim 12, characterized by the fact that the two coils (43a, 43b) are end to end and are separated by a permanent magnet (44) whose poles are in contact with the cores (45a, 45b) of the coils, the said coils being connected together electrically.

14. Sensor device for speed of rotation of a turning member mounted by the agency of a rotating bearing (1) onto a non-turning member, comprising a coder element integral with the turning member producing an alternating magnetic field by means of a multipolar annulus (12) and at least one sensor element (18) integral with the non-turning member and arranged opposite the coder element with an air gap, the sensor element comprising a sensor proper and several magnetic flux concentrator elements associated with the sensor, characterized by the fact that the magnetic flux concentrator elements (46) are in the shape of a U, the end parts of the parallel branches of which constitute two magnetic flux collector branches (46a, 46b), and that the sensor (39) is of the passive type in the form of a coil surrounding a part of the concentrator element other than the flux collector branches, the multipolar annulus (12) being arranged between the two flux collector branches such that two poles of opposite signs are simultaneously and respectively opposite the two flux collector branches.

15. Device according to Claim 14, characterized by the fact that the coil (39) constituting the passive sensor is made in the form of an annulus whose diameter is substantially identical to the diameter of the multipolar annulus (12).

16. Device according to Claim 15, characterized by the fact that it comprises several flux concentrator elements (46) arranged on the circumference of the coil (39) in such a manner that all the concentrator elements cause lines of magnetic field of identical sense to circulate simultaneously in the coil.

17. Sensor device for speed of rotation of a turning member mounted by the agency of a rotating bearing (1) onto a non-turning member, comprising a coder element integral with the turning member producing an alternating magnetic field by means of a multipolar annulus (12) and at least one sensor element (18) integral with the non-turning member and arranged opposite the coder element with an air gap, the sensor element comprising a sensor proper and a magnetic flux concentrator element associated with the sensor, characterized by the fact that the magnetic flux concentrator element (46) is in the shape of a U, the end parts of the parallel branches of which constitute two magnetic flux collector branches (46a, 46b), and that the sensor (39) is of the passive type in the form of a coil surrounding a part of the concentrator element other than the flux collector branches, a part of the U-shaped concentrator element (46), other than the collector branches (46a, 46b), constituting the core of the coil (39), the multipolar annulus (12) being arranged between the two flux collector branches such that two poles of opposite signs are simultaneously and respectively opposite the two flux collector branches.

18. Device according to Claim 17, characterized by the fact that the coil (39) constituting the passive sensor is wound around a part of the concentrator element.

19. Rotating bearing equipped with a sensor device for speed of rotation according to any one of the preceding claims.

## Patentansprüche

1. Vorrichtung zur Drehzahlmessung eines umlaufenden Bauteiles, das mittels eines Wälzlagers (1) auf einem nicht umlaufenden Bauteil gelagert ist, mit einem Geberelement, das mit dem umlaufenden Teil fest verbunden ist und das mittels eines mehrpoligen Ringes (12) ein magnetisches Wechselfeld erzeugt, und mit wenigstens einem Sensorelement (18), das mit dem nicht umlaufenden Teil fest verbunden und mit einem Luftspalt gegenüber dem Geberelement angeordnet ist, wobei das Sensorelement einen eigentlichen Sensor (19, 39) und wenigstens ein dem Sensor zugeordnetes Magnetflußleitelement (20, 21, 41, 42) aufweist, dadurch gekennzeichnet, daß es zwei getrennte Flußleitelemente umfaßt, von denen jedes einen durch einen Schenkel (20b, 21b, 41b, 42b) zum Aufnehmen des Flusses verlängerten Flußleitabschnitt (20c, 21c, 41c, 42c) aufweist, daß der Sensor zwischen den beiden Flußleitabschnitten angebracht ist und daß der mehrpolige Ring (12) zwischen den beiden Flußaufnahmeschenkeln derart angeordnet ist, daß den beiden Flußaufnahmeschenkeln zwei Magnetpole unterschiedlichen Vorzeichens gleichzeitig gegenüber liegen.

2. Vorrichtung nach Anspruch 1, dadurch gekennzeichnet, daß der Sensor (19; 39) und die beiden Flußleitelemente (20, 21; 41, 42) in einem gießfähigen Material vergossen sind, wobei die Enden der beiden Flußaufnahmeschenkel (20b, 21b; 41b, 42b) nach außen vorstehen.

3. Vorrichtung nach Anspruch 1 oder 2, dadurch gekennzeichnet, daß der mehrpolige Ring (12) eine radiale Magnetisierung aufweist, wobei das Sensorelement (18) dem mehrpoligen Ring axial gegenüber liegend derart angeordnet ist, daß die beiden Flußaufnahmeschenkel (20b, 21b; 41b, 42b) dem äußeren und dem inneren Magnetpol des mehrpoligen Ringes jeweils mit einem radialen Luftspalt gegenüber liegen.

4. Vorrichtung nach Anspruch 3, dadurch gekennzeichnet, daß das Sensorelement (18) auf einem Montagering (24) befestigt ist, der auf einem nicht umlaufenden Teil (15) verrastet werden kann.

5. Vorrichtung nach Anspruch 4, dadurch gekennzeichnet, daß der mehrpolige Ring (12) auf einem Tragflansch (10) montiert ist, der Teil einer seitlichen Abdichtung (9) des Wälzlagers (1) ist, wobei der Montagering (24) des Sensorelementes (18) mit dem nicht umlaufenden Teil (15) der vorgenannten Dichtung (9) verrastet ist.

6. Vorrichtung nach Anspruch 5, dadurch gekennzeichnet, daß eine zusätzliche Dichtlippe (31) auf dem Tragflansch (10) angebracht ist und mit einem Randbereich (30) des Montagerings (24) in Berührung steht.

7. Vorrichtung nach einem der vorstehenden Ansprüche 4 bis 6, dadurch gekennzeichnet, daß ein gedruckter Signalverarbeitungsschaltkreis (26) in dem Montagering (24) integriert ist, der außerdem einen mit dem Sensor (19; 39) elektrisch verbundenen Anschlußkopf (29) aufweist, welcher die Übertragung des von dem Sensor abgegebenen Signals an eine äußere Verarbeitungseinheit ermöglicht.

8. Vorrichtung nach Anspruch 1 oder 2, dadurch gekennzeichnet, daß der mehrpolige Ring eine axiale Magnetisierung aufweist, wobei das Sensorelement (18) dem mehrpoligen Ring (12) radial gegenüber liegend derart angeordnet ist, daß die Flußaufnahmeschenkel (20b, 21b) den lateralen Magnetpolen des mehrpoligen Ringes jeweils mit einem axialen Luftspalt gegenüber liegend angeordnet sind.

9. Vorrichtung nach Anspruch 8, dadurch gekennzeichnet, daß das Sensorelement (18) mit einem Stopfen (35) fest verbunden ist, der in radialer Richtung durch ein nicht umlaufendes Teil (37) ragend angeordnet ist.

10. Vorrichtung nach einem der vorstehenden Ansprüche, dadurch gekennzeichnet, daß die Flußleitelemente (20, 21) eine U-förmig gebogene Gestalt aufweisen.

11. Vorrichtung nach einem der vorstehenden Ansprüche, dadurch gekennzeichnet, daß der Sensor (19) ein aktiver Sensor ist, z.B. eine Hall-Sonde, ein magnetfeldabhängiger Widerstand oder dergleichen.

12. Vorrichtung nach einem der Ansprüche 1 bis 10, dadurch gekennzeichnet, daß der Sensor (39) ein passiver Sensor mit einer oder mit zwei Induktionsspule(n) (43a, 43b) ist, deren Kern(e) (40; 45a, 45b) den Flußleitabschnitten (41c, 42c) der Leitelemente (41, 42) gegenüber liegt (liegen).

13. Vorrichtung nach Anspruch 12, dadurch gekennzeichnet, daß die beiden Spulen (43a, 43b) hintereinander angeordnet und durch einen Permanentmagneten (44) voneinander getrennt sind, dessen Magnetpole mit den Kernen (45a, 45b) der Spulen in Berührung stehen, wobei die Spulen elektrisch miteinander verbunden sind.

14. Vorrichtung zur Drehzahlmessung eines umlaufenden Bauteiles, das mittels eines Wälzlagers (1) auf einem nicht umlaufenden Bauteil montiert ist, mit einem Geberelement, das mit dem umlaufenden Teil fest verbunden ist und das mittels eines mehrpoligen Ringes (12) ein magnetisches Wechselfeld erzeugt, und mit wenigstens einem Sensorelement (18), das mit dem nicht umlaufenden Teil fest verbunden und mit einem Luftspalt gegenüber dem Geberelement angeordnet ist, wobei das Sensorelement einen eigentlichen Sensor und mehrere dem Sensor zugeordnete Magnetflußleitelemente aufweist, dadurch gekennzeichnet, daß die Magnetflußleitelemente (46) jeweils in Gestalt eines U ausgebildet sind, bei dem die Endabschnitte der parallelen Schenkel zwei Magnetflußaufnahmeschenkel (46a, 46b) bilden, und daß der Sensor (39) als passiver Sensor in Gestalt einer Spule ausgebildet ist, die ein von den Flußaufnahmeschenkeln verschiedenes Teil des Leitelementes umgibt, wobei der mehrpolige Ring (12) zwischen den beiden Flußaufnahmeschenkeln derart angeordnet ist, daß den beiden Flußaufnahmeschenkeln zwei Magnetpole unterschiedlichen Vorzeichens gleichzeitig gegenüber liegen.

15. Vorrichtung nach Anspruch 14, dadurch gekennzeichnet, daß die den passiven Sensor bildende Spule (39) in Form eines Rings ausgebildet ist, dessen Durchmesser ungefähr gleich dem Durchmesser des mehrpoligen Rings (12) ist.

16. Vorrichtung nach Anspruch 15, dadurch gekennzeichnet, daß sie mehrere Flußleitelemente (46) aufweist, die auf dem Umfang der Spule (39) so angeordnet sind, daß alle Leitelemente magnetische Feldlinien gleicher Richtung innerhalb der Spule sich gleichzeitig ausbreiten lassen.

17. Vorrichtung zur Drehzahlmessung eines umlaufenden Bauteiles, das mittels eines Wälzlagers (1) auf einem nicht umlaufenden Bauteil montiert ist, mit einem Geberelement, das mit dem umlaufenden Teil fest verbunden ist und das mittels eines mehrpoligen Ringes (12) ein magnetisches Wechselfeld erzeugt, und mit wenigstens einem Sensorelement (18), das mit dem nicht umlaufenden Teil fest verbunden und mit einem Luftspalt gegenüber dem Geberelement angeordnet ist, wobei das Sensorelement einen eigentlichen Sensor und ein dem Sensor zugeordnetes Magnetflußleitelement aufweist, dadurch gekennzeichnet, daß das Magnetflußleitelement (46) in Gestalt eines U ausgebildet ist, bei dem die Endabschnitte der parallelen Schenkel zwei Magnetflußaufnahmeschenkel (46a, 46b) bilden, und daß der Sensor (39) als passiver Sensor in Gestalt einer Spule ausgebildet ist, die ein von den Flußaufnahmeschenkeln verschiedenes Teil des Leitelementes umgibt, wobei ein von den Aufnahmeschenkeln (46a, 46b) verschiedenes Teil des U-förmigen Leitelementes (46) den Kern der Spule (39) bildet, und wobei der mehrpolige Ring (12) zwischen den beiden Flußaufnahmeschenkeln derart angeordnet ist, daß den beiden Flußaufnahmeschenkeln zwei Magnetpole unterschiedlichen Vorzeichens gleichzeitig gegenüber liegen.

18. Vorrichtung nach Anspruch 17, dadurch gekennzeichnet, daß die den passiven Sensor bildende Spule um ein Teil des Leitelementes herum gewickelt ist.

19. Wälzlager, das mit einer Vorrichtung zur Drehzahlmessung nach einem der vorstehenden Ansprüche ausgerüstet ist.
